# FASCICULE DE BREVET EUROPEEN

(11) **EP 1 061 754 B1**
(45) Date de publication et mention de la délivrance du brevet: **13.07.2011**
(21) Numéro de dépôt: 00401477.5
(22) Date de dépôt: 25.05.2000
(51) Int. Cl.: H04W 8/24

(54) **Procédé de paramétrage d'un téléphone mobile**
Verfahren zum Parametrieren einer Mobiltelefon
Method for parameterizing of a mobile phone

(30) Priorité: 15.06.1999 FR 9907559
(43) Date de publication de la demande: 20.12.2000
(73) Titulaire: SAGEM MOBILES, 75512 Paris (FR)
(72) Inventeur: Portalier, Yves, Cabinet C. Schmit et Associés, 95000 Cergy (FR); Dimech, Jean-Marc, 60240 Chaumont en Vexin (FR); Marjollet, Laurent, Cabinet C. Schmit & Associés, 95000 Cergy (FR)
(74) Mandataire: Jacobson, Claude

(56) Documents cités:
- FR-A- 2 763 773
- GB-A- 2 327 570
- US-A- 5 404 580
- "Digital cellular telecommunications system (Phase 2+); Personalisation of GSM Mobile Equipment (ME); Mobile functionality specification (GSM 02.22 version 6.0.0 Release 1997); TS 101 624" ETSI STANDARDS, EUROPEAN TELECOMMUNICATIONS STANDARDS INSTITUTE, SOPHIA-ANTIPO, FR, XP014006499

## Description

La présente invention a pour objet un procédé de paramétrage d'un téléphone mobile. Elle a pour but de faciliter la diffusion des téléphones mobiles et donc de permettre une adaptation aisée de l'offre de service à la demande de service, notamment en proposant une architecture technique de ces téléphones mobiles qui favorise les promotions commerciales.

Dans le domaine de la téléphonie mobile, les opérateurs pour séduire leur clientèle proposent des abonnements dans lesquels le prix du téléphone mobile lui-même est inclus. L'économie de tels abonnements n'est bien entendu assurée que si l'utilisateur respecte son contrat jusqu'au bout. Le principe de ces abonnements est d'amortir sur la durée de l'abonnement une partie du coût du téléphone mobile même si plusieurs types d'abonnement sont envisageables.

Il arrive qu'à la fin du contrat un abonné s'adresse à un autre opérateur alors qu'en pratique la durée de son contrat n'a pas été suffisante pour amortir réellement l'offre promotionnelle qui lui avait été faite au début. Il en résulte une perte pour l'opérateur.

Dans l'invention on remédie à ce problème en utilisant la présence d'un circuit de sécurité, amovible, qui conditionne par ailleurs le fonctionnement du téléphone mobile et qui comporte d'une manière classique les caractéristiques de l'abonnement de l'utilisateur. En effet, notamment dans le domaine du GSM (Global System for Mobile - Système Global de Téléphonie Mobile), la mise en service d'un téléphone mobile s'effectue par la reconnaissance dans ce circuit de sécurité des caractéristiques de l'abonnement, avant la connexion du téléphone mobile à une station de base. Au moment de cette reconnaissance, le téléphone mobile prélève dans le circuit de sécurité des informations relatives à l'opérateur qui gère l'abonnement, notamment des gammes de fréquence qui ont été concédées à cet opérateur. Puis ce téléphone mobile entre en relation avec une station de base de son environnement et transmet à cette station de base des caractéristiques de son abonnement, notamment sont identité.

Par ailleurs le circuit amovible est dit circuit de sécurité (SIM - Secured Identification Module - Module d'identification Sécurisé) parce qu'il est associé à une fonction d'antivol du téléphone mobile. Selon une procédure imposée par cette fonction, l'utilisateur du téléphone mobile doit composer sur le clavier de ce dernier un code secret qui en valide le fonctionnement.

Le document «Digital cellular telecommunications system (Phase 2+), Personalisation of GSM Mobile Equipment (ME), Mobile functionality specification (GSM 02.22 version 6.0.0, TS 101 624, janvier 1999)» décrit un mécanisme de personnalisation d'un équipement mobile dans lequel une information est stockée dans l'équipement mobile qui limite les cartes SIM avec lesquelles l'équipement mobile va fonctionner. Le mécanisme prévoit une vérification entre cette information et une information de la carte SIM insérée dans l'équipement mobile, et au cas où la vérification échoue, l'équipement mobile entre dans un état de service limité dans lequel seuls les appels d'urgence peuvent être tentés.

Le document de brevet US 5,404,580 décrit un équipement radio dans lequel un utilisateur peut insérer une carte stockant une information de sélection de fonction radio. A l'insertion de la carte dans l'équipement mobile, un code de validation est lu de la carte et est transmis à une station de base. La station de base, après vérification du code de validation, envoie un signal à l'équipement mobile pour autoriser le fonctionnement radio. L'équipement radio comporte aussi des moyens de contrôle de fonction radio adaptés pour activer un sous-ensemble de fonctions d'appel en réponse à l'information de sélection de fonction radio stockée par la carte.

Le document de brevet GB 2 237 570 décrit un système de communication dans lequel plusieurs équipements mobiles peuvent être utilisés avec une même carte SIM. La carte SIM comporte une liste d'identifiants, dits IMEI, des équipements mobiles avec lesquels la carte SIM peut fonctionner. La carte SIM peut alors déterminer, en comparant l'identifiant de l'équipement mobile dans laquelle elle est insérée et la liste d'identifiants qu'elle comporte, si cet équipement mobile est destiné à être utilisé avec cette carte SIM. Si ce n'est pas le cas, la carte SIM peut empêcher l'équipement mobile de pleinement bénéficier des services du réseau de communication auquel la carte SIM est associée.

Dans invention, pour résoudre le problème commercial cité ci-dessus on a prévu de séparer des fonctions d'utilisation d'un téléphone mobile en deux catégories au moins. Schématiquement on distinguera des fonctions de base et des fonctions de confort. Les fonctions de base seront les fonctions du type émetteur-récepteur et fonctionnement minimal d'un téléphone mobile, notamment appel des numéros internationaux de sécurité (pompiers, police...). Dans la catégorie des fonctions de confort, on rassemblera des fonctions de type main libre, de type vibreur, de type mémorisation de numéros d'un annuaire ou de mémorisation de numéros déjà appelés, de calculette, de possibilité d'envoyer des données ou d'envoyer des télécopies et ainsi de suite.

En outre on enregistre dans la mémoire, à un endroit convenu, du téléphone mobile un code correspondant au code de l'opérateur. Enfin, dans un menu d'utilisation on provoque au moment de la mise en service du téléphone mobile la comparaison d'un code opérateur contenu dans le circuit de sécurité au code opérateur mémorisé dans le téléphone mobile. Si cette comparaison est favorable, on autorise la mise à disposition des fonctions de confort. Si elle n'est pas favorable seules les fonctions de base seront accessibles. En conséquence l'utilisateur qui changera d'opérateur pourra effectivement garder le téléphone mobile qui est devenu sa propriété, mais celui-ci ne pourra plus fonctionner que d'une manière moins intéressante.

Pour pouvoir, dans un perfectionnement, transformer ce téléphone mobile en un téléphone mobile aussi performant qu'au préalable, l'utilisateur devra alors se rapprocher de son ancien opérateur pour obtenir de ce dernier un code de déblocage des fonctions de confort. Bien entendu ce code de déblocage ne lui sera donné que contre remboursement de la partie non amortie du téléphone mobile qui a été mis à sa disposition au début de l'abonnement. En agissant ainsi on apporte une solution technique particulièrement simple au problème cité.

L'invention a donc pour objet un procédé de paramétrage d'un téléphone mobile tel que défini dans les revendications 1-8.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : la représentation schématique d'un téléphone mobile et d'un réseau de téléphonie mobile utilisable pour mettre en oeuvre le procédé de l'invention ;
- Figure 2 : la représentation des différentes étapes du procédé de l'invention dans un programme général contenu dans le téléphone mobile ;
- Figure 3 : un organigramme d'opérations effectuées pour correspondre à la libération des fonctions de confort après un changement d'opérateur.

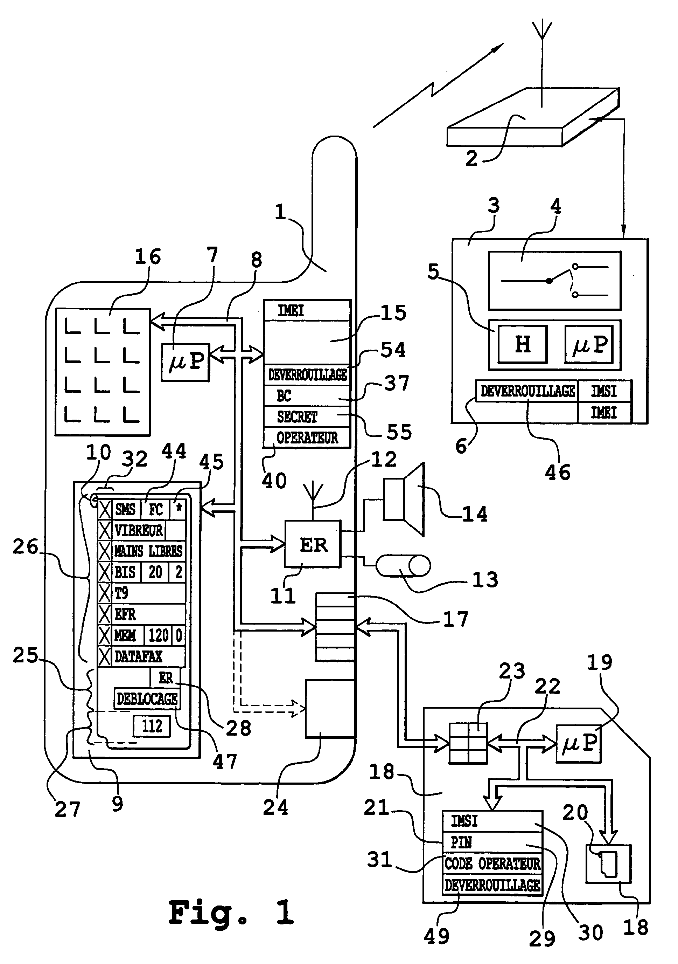

La figure 1 montre schématiquement les moyens utilisables pour mettre en oeuvre le procédé de l'invention. Ces moyens comportent un téléphone mobile 1 qui peut entrer, par l'intermédiaire d'une station de base 2, en relation avec les circuits centraux 3 d'un opérateur de téléphonie mobile. Les circuits centraux 3 comportent essentiellement des circuits de commutation 4 pour permettre à l'utilisateur du téléphone 1 de communiquer avec un autre interlocuteur. Ils comportent également des circuits électroniques 5 parmi lesquels figurent des mémoires 6.

Le téléphone mobile 1 comporte d'une manière classique une unité centrale de traitement 7 reliée par un bus 8 à une mémoire programme 9 contenant un programme 10. Le programme 10 permet la mise en oeuvre de toutes les fonctions du téléphone mobile. Par le bus 8, l'unité centrale 7 est par ailleurs en relation avec des circuits 11 d'émission réception eux-mêmes en relation avec un aérien 12 de rayonnement et d'une manière connue avec un microphone 13, et un ou des haut-parleurs 14. Le bus 8 est par ailleurs également connecté à une mémoire de données 15, à un clavier de commande 16, et à une interface 17 de connexion du téléphone 1 avec un circuit de sécurité 18. Le circuit de sécurité 18 comporte une architecture comparable à celle du téléphone mobile 1 avec un microprocesseur 19, une mémoire programme 20, et une mémoire de données 21 reliés ensemble par un bus 22 à une interface de connexion 23 avec l'interface 17.

Le téléphone mobile 1 peut être muni par ailleurs de circuits annexes 24, par exemple schématiquement reliés au bus 8 mais qui peuvent être organisés ou reliés différemment. Les circuits 24 représentent par exemple un vibreur destiné à remplacer la sonnerie pour rendre le téléphone mobile plus discret. Ou bien ils représentent un haut-parleur main libre, ou bien un dispositif d'émission réception à destination d'un microphone et d'un haut-parleur déportés et portés sur un casque. Ils représentent des équipements et/ou des fonctions annexes au téléphone 1.

Selon une caractéristique essentielle de l'invention, les fonctions d'utilisation du téléphone mobile seront réparties en des fonctions de base 25 et des fonctions de confort 26. En pratique, cette répartition sera même complétée par des fonctions indispensables 27. La présence des fonctions de base 25 et des fonctions indispensables 27, est connue dans l'état de la technique. Parmi les fonctions indispensables 27, on connaît essentiellement la possibilité d'appeler des numéros urgents, notamment le 112 qui est le numéro des pompiers. Ces fonctions indispensables, du type appel du 112, sont utilisables avec un téléphone de type GSM, même si ce dernier n'est pas muni du circuit de sécurité 18. Et par conséquent dans ce cas, toutes les opérations de vérification de la présence de ce circuit de sécurité ne sont pas déterminantes pour empêcher l'appel de ces numéros de sécurité.

Dans les fonctions de base 25 on notera essentiellement la fonction d'émission réception 28 qui, d'une manière connue, comportera au moment de la mise en service du téléphone mobile la comparaison d'un code secret composé par l'utilisateur sur le clavier 16 avec un code secret 29 mémorisé dans la mémoire 21. Ce code secret est le code PIN pour Personnal Identification Number - Numéro d'Identification Personnel. Une fois cette mise en service effectuée, le programme 28 et/ou le sous-programme 10 effectuent le prélèvement dans la mémoire 21 d'une information 30, IMSI International Mobile Subscriber Identity - identité d'abonnement international au réseau mobile, ainsi qu'une information 31 CODE OPERATEUR représentative de l'opérateur de téléphonie mobile auprès duquel un abonnement a été souscrit. Ces informations sont échangées, au moment de la mise en service, entre le téléphone mobile 1 et la station de base 2 de manière à ce que les circuits 3 reconnaissent le téléphone mobile 1 et autorisent sa communication sur le réseau de cet opérateur. Les fonctions de base 28 comportent bien entendu la possibilité pour un utilisateur de composer un numéro de téléphone, de pouvoir être connecté à un autre interlocuteur et d'échanger des signaux de parole avec cet autre interlocuteur. Eventuellement certaines autres fonctions pourront être incorporées dans les fonctions de base, par exemple un éclairage d'un écran dans le cas où on utilise le téléphone mobile la nuit, une transformation du téléphone mobile en calculette et ainsi de suite.

Cependant, selon l'invention, on créera dans le programme 10 une différenciation de toutes les fonctions utilisables en au moins deux groupes : le groupe des fonctions de base 25 et le groupe des fonctions de confort 26. En pratique, dans le programme 10 de la mémoire 9, des sous-programmes correspondant à ces différentes fonctions sont mémorisés à des adresses. On pourrait alors utiliser ces adresses pour distinguer les fonctions en fonctions de base ou fonctions confort. Par exemple, tel que schématiquement représenté, les fonctions de confort 26 auraient des adresses de stockage de sous-programmes correspondant à des valeurs inférieures aux adresses de stockage des sous-programmes de la fonction 28. On pourra bien entendu procéder différemment, la représentation donnée ici étant uniquement schématique.

De préférence chaque sous-programme de fonction comportera en entête un paramètre indiquant qu'il représente une fonction de base ou une fonction de confort. Parmi les fonctions de confort on pourra, à titre d'exemple non limitatif, présenter des fonctions de type SMS (Short Message Service - envoi ou réception de petits messages courts de service), de type vibreur, une fonction mains libres, une fonction par laquelle un accès alphabétique à une mémoire du téléphone mobile est facilité compte tenu de ce que le clavier 16 n'est en principe qu'un clavier numérique et non pas alphanumérique, une fonction EFR qui est une fonction permettant la diffusion d'un son numérique à très haute qualité, et une fonction data-fax permettant au téléphone mobile d'émettre ou de recevoir des données et/ou des télécopies.

D'autres fonctions de confort seront un peu plus complexes. Il s'agit par exemple d'une fonction de mémorisation MEM dans laquelle on distinguera deux modes d'utilisation, un mode d'utilisation de base et un mode d'utilisation de confort. Par exemple, ici on a schématiquement représenté que si la fonction de mémorisation est utilisée dans un mode de base elle ne permet pas de mémoriser de numéros de téléphone dans une mémoire du téléphone mobile, alors que si elle est utilisée dans un mode de confort elle permet d'en mémoriser 120. De la même façon une fonction BIS permet de rappeler des derniers numéros d'appel, appelés et/ou reçus par le téléphone mobile. Dans le cas du mode de base on n'en mémorisera que deux. Dans le cas du mode de confort on pourra en mémoriser 20.

La mise en oeuvre de ces fonctions de confort est conditionnée par la présence des sous-programmes correspondants dans le programme 10. Pour des raisons de simplification, le programme général 10 du téléphone mobile comportera toutes ces possibilités, que le téléphone mobile soit ou non équipé des équipements et circuits annexes 24 correspondant à ces fonctions. Par exemple il est possible qu'un circuit vibreur ne soit pas présent dans le téléphone mobile. Par exemple ceci se produira lorsqu'on aura voulu pour la fabrication prévoir des téléphones mobiles de différente qualité, et de prix différents, en fonction de leur équipement. Dans ce cas dans les sous-programmes des fonctions de confort une information complémentaire sera présente en entête, en complément de l'information relative à leurs caractéristiques de confort. Cette information complémentaire signale que cette fonction peut ou ne peut pas être effectivement mise en oeuvre dans le téléphone mobile 1 concerné. Par exemple dans une zone 32 en entête de chacun des sous-programmes correspondant à ces fonctions de confort on fait figurer une information représentative de la disponibilité réelle ou non de la fonction. Par exemple, ici on a indiqué par une croix que toutes les fonctions de confort du groupe 26 étaient accessibles avec le téléphone mobile 1 : il s'agit d'un téléphone muni de toutes les options d'utilisation.

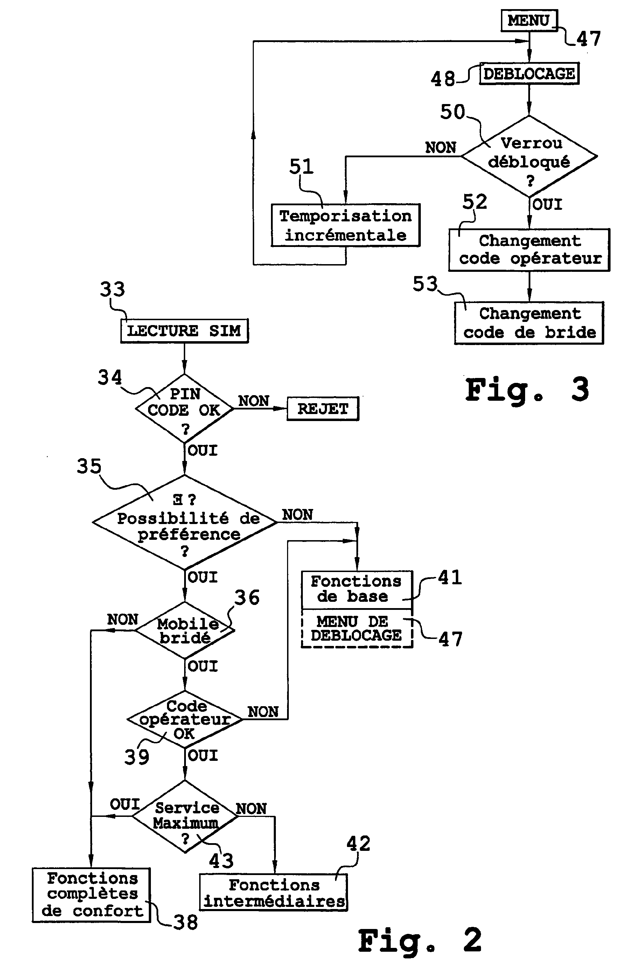

La figure 2 montre les étapes du procédé de l'invention. Au cours d'une première étape 33, au moment de la mise en service du téléphone 1, le microprocesseur 7 en application du sous-programme 28 du programme 10, provoque la lecture du circuit de sécurité SIM 18. Le programme 28 et ou le programme 20 comportent alors la mise en oeuvre d'un test 34 par lequel l'utilisateur doit composer sur le clavier 16 le code PIN correspondant au circuit 18. En cas d'échec notamment d'échecs répétés, le téléphone ne se met pas en service. Il se trouve dans une situation de rejet dans laquelle toutefois l'utilisation des fonctions essentielles 27 est encore possible. En cas de succès le programme 10 provoque la vérification au cours d'un test 35 qu'au moins une des fonctions de confort du groupe 26 possède dans la zone 32 d'entête de sous-programme une indication de présence. Par exemple, si le téléphone est un téléphone d'entrée de gamme, muni d'aucune option, alors seules des fonctions de base 25 seront disponibles.

Par contre s'il possède au moins une fonction de confort, le programme 10 lance alors un test 36 essentiel de l'invention. Au cours du test 36, on vérifie que l'utilisation des fonctions de base 26 est bridée ou n'est pas bridée. Ceci sera matérialisé par la présence dans une zone 37 de la mémoire 15 (mais il pourrait s'agir également d'une zone dans la mémoire 21 du circuit 18), d'une information BC représentative de cet état de blocage des fonctions de confort. Par exemple cette information pourra être codée sur 2 bits. Si ces 2 bits sont à l'état 00 on considérera que l'utilisation des fonctions de confort 26 est libre. Dans ces conditions, le téléphone mobile 1 peut accéder à un menu 38 comportant l'ensemble des fonctions 25, 26 et 27.

Par contre si le code est différent, par exemple 01, on saura qu'il s'agit d'un téléphone dans lequel l'usage des fonctions de confort n'est pas accessible sans condition. Il n'est alors accessible que sous la condition du succès à un test 39 ultérieur au cours duquel on vérifie qu'un code opérateur stocké dans une zone 40 de la mémoire 15 correspond, ou est identique, au code opérateur stocké dans la zone 31 de la mémoire 21. En définitive on va vérifier que l'utilisateur continue à utiliser le téléphone mobile dans le cadre de son contrat d'abonnement correspondant à l'achat de son téléphone mobile. Ceci signifie que l'acheteur, au moment où il a acheté son téléphone mobile auprès d'un opérateur a acheté un téléphone mobile à prix réduit mais dans lequel, en contrepartie, dans la zone 40 avait déjà été préenregistré le code de cet opérateur. Ceci est facile à réaliser pour un fabriquant de téléphones mobiles qui vend à un opérateur des lots de téléphones mobiles. Il suffit qu'au moment d'une personnalisation des téléphones mobiles, notamment pour leur attribuer un numéro de série propre (IMEI) le code opérateur soit enregistré en zone 40 de la mémoire 15.

Si le test 39 n'est pas favorable, c'est que le circuit 18 indique un code opérateur différent de celui stocké en zone 40. Dans ces conditions le téléphone mobile ne proposera qu'un menu 41 de fonctions de base, typiquement les fonctions 25.

Si le test 39 reconnaît un succès on pourra avoir accès en variante au menu 38 ou à un menu 42 qui, en terme de confort, est intermédiaire entre le menu 41 et le menu 38. Par exemple seulement certaines des fonctions du groupe 26 seront utilisables dans le menu 42 alors qu'elles le seront toutes dans le menu 38. Dans ce cas, le code de bridage 37, au lieu d'avoir une valeur 01, c'est à dire essentiellement différente de 00 pourra avoir une valeur 1, 2, 3 qui permet à un test 43 d'arbitrer entre la totalité ou une partie seulement des fonctions de confort mises à disposition.

Pour organiser cette situation on pourra prévoir que dans l'entête 41 de chacun des sous-programmes de fonctions de confort du groupe 26 figurera une information de sous-groupe du code de blocage des fonctions de confort. Ainsi, si en zone 37 est présente la valeur 00, toutes les fonctions de confort sont disponibles sans vérification du test 39. Si en zone 37 la valeur BC a une valeur 01, le test 43 donnera également accès au menu 38 dans lequel toutes les fonctions de confort sont accessibles. Par contre, s'il y a une valeur 02 stockée dans la zone 37, on prendra en considération les fonctions de confort qui, en plus d'un code FC de fonction de confort stocké dans la zone 44, possèdent dans une zone 45 associée à la même fonction de confort une indication, par exemple ici une étoile, indiquant que la fonction concernée fait partie du groupe des fonctions intermédiaires présentables par le menu 42. L'absence de l'étoile élimine la fonction concernée du menu 42. En agissant ainsi on a organisé une mise à disposition des fonctions du téléphone mobile (dans la mesure où il en est équipé) qui correspond d'une part à une situation de souscription (par le test 43) d'un type d'abonnement, et d'autre part, par le test 39, à la personnalité d'un opérateur auprès de qui l'abonnement a été souscrit.

Lorsqu'il y a rupture du contrat, figure 3, on permet à l'utilisateur du téléphone mobile 1 de récupérer la totalité des fonctions de ce téléphone mobile en s'adressant à l'opérateur du circuit 3 pour lui demander la communication, notamment par un écrit, (contre remboursement bien entendu) d'un code de déverrouillage 46 mémorisé dans la mémoire 6 du circuit 3 en correspondance d'une information IMSI correspondant au circuit 18. Muni de cette information, l'utilisateur peut choisir, de préférence dans les fonctions de base 25, un menu de déblocage 47 par lequel, au cours d'une opération 48, le programme 10 demande à cet utilisateur de composer avec le clavier 16 le code de déverrouillage. Cette opération 48 a pour objet de comparer dans le circuit 7, voire dans le circuit 19, le code de déverrouillage composé avec un code de déverrouillage 54 déjà présent dans la mémoire 15, ou éventuellement un code de déverrouillage 49 déjà présent dans le circuit 18.

Si au cours d'une étape 50 de comparaison des deux codes de déverrouillage la correspondance n'est pas acquise, l'utilisateur peut recommencer. De préférence il pourra recommencer autant de fois qu'il le veut mais à chaque fois il devra attendre une durée d'attente imposée par une étape d'attente 51 dont la durée est de plus en plus longue au fur et à mesure des échecs successifs.

En cas de succès on provoquera essentiellement deux modifications. Premièrement au cours d'une étape 52 on changera le code opérateur 40. On peut le remplacer par un code opérateur artificiel, par exemple une série de 1. On peut aussi le remplacer directement par un code opérateur d'un autre opérateur dont le circuit SIM serait mis à la place du premier circuit SIM dans le téléphone 1. Deuxièmement, ou préalablement, au cours d'une étape 53 on changera le contenu de la zone 37 pour indiquer que le mobile n'est plus bridé (code 00).

En variante, le code de déverrouillage sera mémorisé dans la mémoire 15 dans un emplacement 54. Dans ce cas l'opération de déblocage 48 comportera de préférence un décryptage ou un cryptage du code composé au clavier 16 et/ou du code transmis par l'opérateur du circuit 3 avant de le comparer au code de la zone 54. Ce décryptage peut être mené en utilisant un code secret contenu dans une zone 55 de la mémoire 15. Ce code secret est connu par ailleurs dans la mémoire 6 en correspondance du numéro de série IMEI du téléphone mobile et du numéro IMSI du circuit 18 également stocké dans la mémoire 6.

Au moment du déverrouillage, la zone 37 comporte une indication 01 (toutes les fonctions de confort sont disponibles) ou une information 02 (seulement certaines sont accessibles, même si toutes sont équipées dans le téléphone mobile). Dans ce cas on peut prévoir que, pour un autre opérateur qui prendrait en charge le complément du paiement, la mise à disposition ou tout ou partie des fonctions de confort soit aussi envisageable. Dans ce cas, le code de déverrouillage peut ne pas être unique mais peut avoir plusieurs valeurs. Le décryptage de ce code de déverrouillage conduit toujours à remplacer une valeur ou une autre en zone 37, en plus du changement du nom du code opérateur.

Le cryptage du code de déverrouillage et son décryptage peuvent comporter la prise en considération d'une part de l'identification 30 (IMSI) de l'abonnement ou d'autre part la prise en considération du numéro du téléphone mobile (IMEI). Par la suite ce circuit 18 sera remplacé par celui correspondant à un nouvel opérateur.

## Revendications

1. Procédé de paramétrage d'un téléphone mobile (1), des programmes (10) représentatifs de fonctions d'utilisation de ce téléphone mobile étant stockés dans une mémoire (9) du téléphone mobile,
le procédé étant tel que, le téléphone mobile étant muni d'un premier circuit de sécurité (18) amovible, le téléphone mobile :
- transmet à une station de base (2) un premier code d'opérateur (31) de téléphonie mobile et une information d'identité d'abonnement (IMSI) stockés dans le premier circuit de sécurité, et
- autorise la mise en oeuvre de fonctions d'utilisation du téléphone mobile, en réponse à une autorisation de la station de base suite à la transmission du premier code d'opérateur et de l'information d'identité d'abonnement ;
le procédé étant **caractérisé en ce que**, les programmes étant répartis en au moins deux groupes correspondant respectivement à des fonctions de base de téléphonie (25) et à des fonctions de confort (26), les fonctions de base de téléphonie étant du type émetteur-récepteur de téléphonie et fonctionnement minimal du téléphone mobile, le téléphone mobile :
- autorise, indépendamment de l'autorisation de la station de base, la mise en oeuvre de fonctions indispensables parmi les fonctions de base de téléphonie du téléphone mobile,
et **en ce que**, suite à l'autorisation de la station de base, le téléphone mobile :
- autorise la mise en oeuvre des fonctions de base de téléphonie ;
- compare le premier code d'opérateur (31) de téléphonie mobile stocké dans le premier circuit de sécurité et un deuxième code d'opérateur (40) de téléphonie mobile stocké dans la mémoire du téléphone mobile, et
- autorise la mise en oeuvre de fonctions de confort quand la comparaison est réussie.

2. Procédé selon la revendication 1, **caractérisé en ce que** des programmes stockés dans la mémoire (9) du téléphone mobile sont représentatif d'un ensemble de fonctions de confort, et **en ce que** le téléphone mobile autorise la mise en oeuvre de fonctions de confort qui correspondent à des équipements annexes (24) effectivement mis à disposition du téléphone mobile.

3. Procédé selon l'une des revendications 1 à 2, **caractérisé en ce que** le téléphone mobile compare le premier et le deuxième code d'opérateur de téléphonie mobile seulement si un code d'autorisation, stocké dans la mémoire du téléphone mobile, indique que l'utilisation du téléphone mobile est bridée, et si ce code d'autorisation indique que l'utilisation du téléphone mobile n'est pas bridée, le téléphone mobile autorise la mise en oeuvre des fonctions de confort.

4. Procédé selon la revendication 3, **caractérisé en ce que** le terminal mobile stocke ledit code d'autorisation sous forme cryptée.

5. Procédé selon l'une des revendications 1 à 4, **caractérisé en ce que**, le téléphone mobile stockant un code secret, le téléphone mobile disposant d'un clavier et étant muni d'un deuxième circuit de sécurité en remplacement du premier circuit de sécurité, le procédé est tel que le téléphone mobile :
- compare un code secret (46) composé au clavier avec le code secret (54) stocké, et
- en cas de comparaison réussie desdits codes secrets, modifie ledit deuxième code d'opérateur soit pour le faire correspondre à un code opérateur mémorisé dans le deuxième circuit de sécurité, soit en le remplaçant par un code opérateur artificiel.

6. Procédé selon la revendication 5, **caractérisé en ce que**, en cas d'insuccès de la comparaison desdits codes secrets, le téléphone mobile autorise une autre comparaison de code secrets après une période d'attente, la durée de cette période d'attente étant augmentée en cas d'insuccès répétés de la comparaison desdits codes secrets.

7. Procédé selon l'une des revendications 1 à 6, **caractérisé en ce que** le terminal mobile stocke le deuxième code d'opérateur de téléphonie sous forme cryptée.

8. Procédé selon l'une des revendications 1 à 7, **caractérisé en ce que** les fonctions de confort comportent au moins une des fonctions suivantes :
- une fonction de type SMS d'envoi et/ou de réception de messages courts de service,
- une fonction de type vibreur,
- une fonction mains libres,
- une fonction par laquelle un accès alphabétique à une mémoire du téléphone mobile est facilité compte tenu de ce que le clavier n'est pas qu'un clavier numérique et non pas alphanumérique,
- une fonction de type EFR permettant la diffusion d'un son numérique à très haute qualité,
- une fonction data-fax permettant au téléphone mobile d'émettre ou de recevoir des données et/ou des télécopies,
- une fonction d'éclairage d'un écran,
- une fonction de transformation du téléphone mobile en calculette.

## Claims

1. Process for configuring a mobile telephone (1), programs (10) representing functions of use of this mobile telephone being stored in a memory (9) of the mobile telephone,
the process being such that, the mobile telephone being equipped with a first removable security circuit (18), the mobile telephone:
- transmits to a base station (2) a first operator code (31) of mobile telephony and an International Mobile Subscriber Identity (IMSI) stored in the first security circuit, and
- authorises the implementation of functions of use of the mobile telephone, in response to an authorisation from the base station following the transmission of the first operator code and of the International Mobile Subscriber Identity;
the process being **characterised in that**, the programs being split into at least two groups corresponding respectively to basic telephony functions (25) and to comfort functions (26), the basic telephony functions being of the telephony send-receive type and minimal functioning of the mobile telephone, the mobile telephone:
- authorises, independently of the authorisation from the base station, the implementation of indispensible functions among the basic telephony functions of the mobile telephone,
and **in that**, following the authorisation from the base station, the mobile telephone:
- authorises the implementation of the basic telephony functions;
- compares the first operator code (31) of mobile telephony stored in the first security circuit and a second mobile telephony operator code (40) stored in the memory of the mobile telephone, and
- authorises the implementation of comfort functions when the comparison is successful.

2. Process according to claim 1, **characterised in that** programs stored in the memory (9) of the mobile telephone represent a set of comfort functions, and **in that** the mobile telephone authorises the implementation of comfort functions which correspond to attached equipment (24) actually made available to the mobile telephone.

3. Process according to any one of claims 1 to 2, **characterised in that** the mobile telephone compares the first and second mobile telephony operator code only if an authorisation code, stored in the memory of the mobile telephone, indicates that the use of the mobile telephone is restricted, and if this authorisation code indicates that the use of the mobile telephone is not restricted, the mobile telephone authorises the implementation of the comfort functions.

4. Process according to claim 3, **characterised in that** the mobile terminal stores the said authorisation code in an encrypted format.

5. Process according to any one of claims 1 to 4, **characterised in that**, the mobile telephone storing a secret code, the mobile telephone having a keypad and being equipped with a second security circuit in replacement for the first security circuit, the process is such that the mobile telephone:
- compares a secret code (46) entered via the keypad with the secret code (54) stored, and
- in the event of successful comparison of the said secret codes, modifies the said second operator code either to make it correspond to an operator code memorised in the second security circuit, or by replacing it by an artificial operator code.

6. Process according to claim 5, **characterised in that**, in the event of unsuccessful comparison of said secret codes, the mobile telephone authorises another comparison of secret codes after a waiting period, the duration of this waiting period being extended in the event of repeated unsuccessful comparisons of the said secret codes.

7. Process according to any one of claims 1 to 6, **characterised in that** the mobile terminal stores the second telephony operator code in an encrypted format.

8. Process according to any one of claims 1 to 7, **characterised in that** the comfort functions include at least one of the following functions:
- a send and/or receive function of the SMS type for short service messages.
- a function of the vibrator type,
- a hands-free function,
- a function by which alphabetical access to a memory of the mobile telephone is facilitated taking into account that the keypad is only a numeric keypad and not alphanumeric,
- a function of the EFR type permitting the emission of very high quality digital sound,
- a data-fax function permitting the mobile telephone to send or receive data and/or faxes,
- a function for illuminating a screen,
- a function for transforming the mobile telephone into a calculator.

## Patentansprüche

1. Verfahren zum Parametrisieren eines Mobiltelefons (1), wobei für Anwendungsfunktionen des Mobiltelefons repräsentative Programme (10) in einem Speicher (9) des Mobiltelefons gespeichert sind,
wobei das Mobiltelefon mit einem ersten herausnehmbaren Sicherheitsschaltkreis (18) ausgestattet ist, wobei das Verfahren derart ist, dass das Mobiltelefon:
- einen ersten Mobilfunkanbieter-Code (31) und eine Teilnehmer-Identitäts-Information (IMSI), die in dem ersten Sicherheitsschaltkreis gespeichert sind, an eine Basisstation (2) übermittelt, und
- in Antwort auf eine Autorisierung der Basisstation im Anschluss an die Übermittlung des ersten Anbieter-Codes und der Teilnehmer-Identitäts-Information das Durchführen von Anwendungsfunktionen des Mobiltelefons autorisiert,
wobei die Programme in mindestens zwei Gruppen aufgeteilt sind, die jeweils Telefonie-Grundfunktionen (25) und Komfortfunktionen (26) entsprechen, wobei die Telefonie-Grundfunktionen vom Telefonie-Sender-Empfänger- und vom Mobiltelefonie-Minimalfunktionstyp sind, wobei das Verfahren **dadurch gekennzeichnet ist, dass** das Mobiltelefon:
- unabhängig von der Autorisierung der Basisstation das Durchführen von notwendigen Funktionen aus den Telefonie-Grundfunktionen des Mobiltelefons autorisiert,
und dass das Mobiltelefon im Anschluss an die Autorisierung der Basisstation
- das Durchführen der Telefonie-Grundfunktionen autorisiert,
- den in dem ersten Sicherheitsschaltkreis gespeicherten ersten Mobilfunkanbieter-Code (31) mit einem in dem Speicher des Mobiltelefons gespeicherten zweiten Mobilfunkanbieter-Code (40) vergleicht, und
- das Durchführen von Komfortfunktionen autorisiert, wenn der Vergleich gelungen ist.

2. Verfahren gemäß Anspruch 1, **dadurch gekennzeichnet, dass** in dem Speicher (9) des Mobiltelefons gespeicherte Programme für eine Gesamtheit von Komfortfunktionen repräsentativ sind, und dass das Mobiltelefon das Durchführen von Komfortfunktionen autorisiert, die Zusatzeinrichtungen (24) entsprechen, die dem Mobiltelefon tatsächlich zur Verfügung gestellt werden.

3. Verfahren gemäß einem der Ansprüche 1 bis 2, **dadurch gekennzeichnet, dass** das Mobiltelefon den ersten und den zweiten Mobilfunkanbieter-Code nur dann miteinander vergleicht, wenn ein in dem Speicher des Mobiltelefons gespeicherter Autorisierungscode anzeigt, dass die Nutzung des Mobiltelefons eingeschränkt ist, und, wenn der Autorisierungscode anzeigt, dass die Nutzung des Mobiltelefons nicht eingeschränkt ist, das Mobiltelefon das Durchführen der Komfortfunktionen autorisiert.

4. Verfahren gemäß Anspruch 3, **dadurch gekennzeichnet, dass** das mobile Endgerät den Autorisierungscode in verschlüsselter Form speichert.

5. Verfahren gemäß einem der Ansprüche 1 bis 4, **dadurch gekennzeichnet, dass** das Mobiltelefon einen geheimen Code speichert, dass das Mobiltelefon eine Tastatur aufweist und mit einem zweiten Sicherheitsschaltkreis als Ersatz für den ersten Sicherheitsschaltkreis ausgestattet ist, und das Verfahren derart ist, dass das Mobiltelefon:
- einen mit der Tastatur eingegebenen geheimen Code (46) mit dem gespeicherten geheimen Code (54) vergleicht, und
- im Fall eines gelungenen Vergleichs der geheimen Codes den zweiten Anbieter-Code modifiziert, entweder derart, dass dieser einem in dem zweiten Sicherheitsschaltkreis gespeicherten Anbieter-Code entspricht, oder durch Ersetzen desselben durch einen künstlichen Anbieter-Code.

6. Verfahren gemäß Anspruch 5, **dadurch gekennzeichnet, dass** das Mobiltelefon im Fall eines erfolglosen Vergleichs der geheimen Codes einen weiteren Vergleich von geheimen Codes nach einem Wartezeitraum autorisiert, wobei sich die Dauer des Wartezeitraums im Fall von wiederholten erfolglosen Vergleichen der geheimen Codes vergrößert.

7. Verfahren gemäß einem der Ansprüche 1 bis 6, **dadurch gekennzeichnet, dass** das mobile Endgerät den zweiten Telefonie-Anbieter-Code in verschlüsselter Form speichert.

8. Verfahren gemäß einem der Ansprüche 1 bis 7, **dadurch gekennzeichnet, dass** die Komfortfunktionen mindestens eine der folgenden Funktionen aufweisen:
- eine Funktion des SMS-Typs zum Senden und/oder Empfangen von kurzen Dienstnachrichten,
- eine Funktion des Vibrationstyps,
- eine Freisprechfunktion,
- eine Funktion, mittels welcher ein alphabetischer zugriff auf einen Speicher des Mobiltelefons erleichtert wird, unter Berücksichtigung dessen, dass die Tastatur nur eine numerische Tastatur und nicht eine alphanumerische Tastatur ist,
- eine Funktion des EFR-Typs, die das Ausstrahlen eines digitalen Tons mit sehr hoher Qualität ermöglicht,
- eine Daten-Fax-Funktion, die dem Mobiltelefon das Senden oder Empfangen von Daten und/oder Telefaxen ermöglicht,
- eine Beleuchtungsfunktion für einen Bildschirm, und
- eine Funktion des Umwandelns des Mobiltelefons in einen Taschenrechner.
